# EUROPEAN PATENT APPLICATION

(11) **EP 3 576 291 A1**
(43) Date of publication of application: **04.12.2019**
(21) Application number: 19177319.1
(22) Date of filing: 29.05.2019
(51) Int. Cl.: H02P 9/04, H02P 9/48, F02D 41/00, H02J 3/46, F02B 63/04

(54) **DISTRIBUTION DEVICE ARRANGED TO PROVIDE ELECTRICAL POWER TO A LOAD**

(30) Priority: 31.05.2018 NL 2021032
(71) Applicant: Bredenoord Holding B.V., 7325 WT Apeldoorn (NL)
(72) Inventor: Bresser, Marinus Christiaan, 7325 WT Apeldoorn (NL); Bussink, Hendrik Jan, 7325 WT Apeldoorn (NL)
(74) Representative: V.O.

(57) **Abstract**

A distribution device combines power signals from multiple - two or more - engine-generators. The distribution device controls engine behaviour by directly controlling the engine control units of the engines. This control of the engine allows to control an amount of power transferred to and provided by generator, as well as phase and frequency of the power signal. Start and stop control is arranged by the distribution device instructing a central processing module of the engine-generator to either start or shut down the engine of a particular engine-generator.

## Description

### TECHNICAL FIELD

The various aspects and implementations thereof relate to distribution units for providing combined power provided by a multitude of engine-generators to one load or one set of loads.

### BACKGROUND

In certain scenarios, like large festivals, the demand for electrical power is at such level that it surpasses the maximum amount of power that may be provided by a single engine-generator unit, power signals of multiple engine-generators are to be combined. During the combining operation, each engine-generator has to be controlled. In case the engine-generators are different or even very different, a lot of flexibility is required from a distribution unit at which the generated power signals are combined, because every manufacturer uses a different architecture.

### SUMMARY

It is preferred to provide a power distributor that provides less complexity in combining power signals from multiple engine-generators.

A first aspect provides a distribution device arranged to provide electrical power to a load. The device comprises a first power input for receiving electrical power from a first generator comprised by a first engine-generator and a second power input for receiving electrical power from a second generator comprised by a second engine-generator. The device further comprises a power requirement module for determining a power requirement for the load and a power supply connector for providing power received via the first power in put and the second power input to the load. The device also comprises a first local control communication module arranged to communicate to a first engine control unit of a first combustion engine of the first engine-generator, a second local control communication module to communicate to a second engine control unit of a second combustion engine of the second engine-generator, a first central control communication module to communicate to a first central control unit of the first engine-generator and a second central control communication module to communicate to a central local control unit of the second engine-generator. Lastly, the device comprises a central processing unit arranged to determine a power requirement of the load, switch at least one of the first engine-generator and second engine-generator on or off via at least one of the first control communication module and the second control communication module, respectively, in accordance with the determined power requirement; and control power provided by at least one of the first engine-generator and second engine-generator by controlling operation of the first combustion engine via the first local communication module and controlling operation of the second combustion engine via the second local communication module, in accordance with the determined power requirement.

By directly tapping into the engine control unit of the combustion engine of the engine-generator, a more or less standardised interface is addressed - at least for some functions. This means that higher level architecture, which may differ over different engine-generators, is bypassed. In this way, architecture of the distributer unit may be kept much simpler than before. The starting and stopping of the engine is preferably instructed by means of the central control communication modules; reason for this is that starting and stopping is not directly operated by the engine control unit, but rather by a central processing unit that controls a starting motor (electromotor) and pre-glowing of a Diesel engine.

In an implementation, the power requirement module is arranged to determine a power factor of the load, a first local communication module arranged to communicate to a first automatic voltage regulator of the first engine-generator and a second local communication module arranged to communicate to a second automatic voltage regulator of the second engine-generator. Furthermore, the central processing unit is arranged to control at least one of the first automatic voltage regulator and the second automatic voltage regulator to control a first power factor of electrical power supplied by the first generator and a second power factor of electrical power supplied by the second generator such that a total power factor of the total electrical power supplied to the distribution device matches the determined required power factor.

If the load comprises reactive elements - inductances and capacitances - the load may have to be provided with reactive power or imaginary power as well. This implementation takes this into account.

An implementation further comprises at least one of a first socket or a first plug connected to the first local communication module and the first central control communication module for providing a connector to a cable for transferring data from the distribution device to the first engine-generator; and at least one of a second socket or a second plug connected to the second local communication module and the second central control communication module for providing a connector to a cable for transferring data from the distribution device to the second engine-generator. In this embodiment, only one connector - either a socket or a plug - or a combination of both - is required for providing a connection,

In another implementation, the central processing unit has access to information on a first maximum power that may be provided by the first engine-generator and a second maximum power that may be provided by the second engine-generator, the first power being equal to or larger. Furthermore, the central processing unit is further arranged to switch off the second engine-generator is the determined required power is below the first maximum power. Running one engine at full speed is more efficient than running two at half speed.

A second aspect provides an engine-generator module comprising an internal combustion engine, an electrical generator connected to the engine for converting mechanical energy to electrical energy, an engine control unit for controlling operation of the internal combustion engine in accordance with instructions provided by the distribution device according to any of the preceding claims; and a local control unit for controlling operation of the engine-generator module by stopping and starting the internal combustion engine in accordance with instructions provided by the distribution device according to the first aspect. Such engine-generator is advantageous to operate with a distribution device of the first aspect.

### BRIEF DESCRIPTION OF THE DRAWINGS

The various aspects and embodiments thereof will now be described in further detail in conjunction with a drawing. In the drawing:

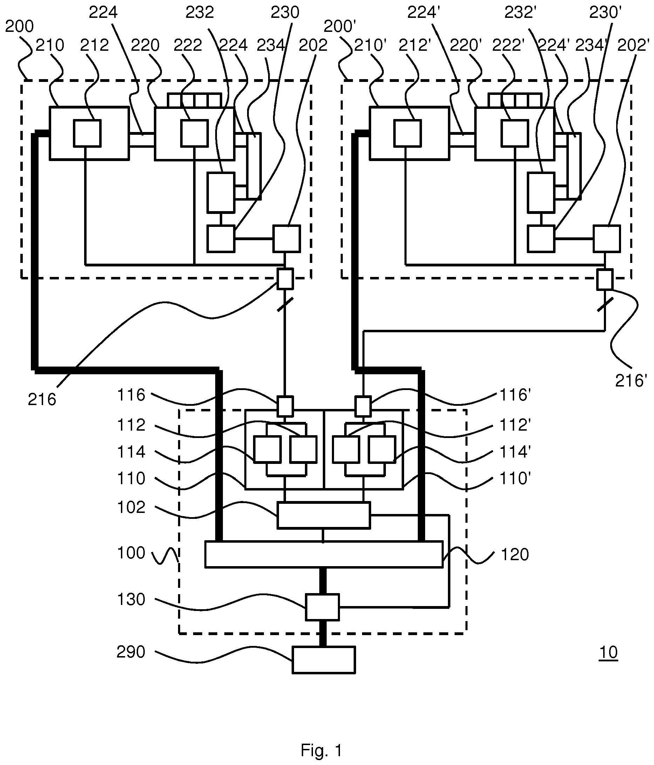

Figure 1 shows a distributed power system

### DETAILED DESCRIPTION

Figure 1 shows a distributed power system 10. The distributed power system 10 comprises a first engine-generator 200 and a second engine-generator 200'.

The first engine-generator 200 comprises a combustion engine 220 for generating mechanical energy and a generator 210 for converting the mechanical energy to electrical and. The generator 210 is coupled to the engine 220 via the crankshaft 224 of the engine. The crank shaft 224 is, preferably via a belt 234, also coupled to a starter engine 232. The starter engine 232 is coupled to a starter circuit 230. The starter circuit 230 is arranged to provide the starter engine 232 with electrical power for aiding in starting the engine 220.

The first engine-generator 200 comprises an automatic voltage regulator 212 arranged to regulate a voltage level provided by the first engine-generator 200 and to regulate a power factor of electrical power provided by the engine-generator 200. The power factor is determined by the ratio of reactive power and real power. The engine 220 comprises an engine control unit 222 for controlling operation of the engine 220 and for obtaining sensor data from various sensors comprised by the engine 220. The first engine-generator 200 also comprises a for controlling various parts and functionality of the first engine-generator 200. Among others, the central processing circuit controls the starter circuit 230.

The automatic voltage regulator 212, the engine control unit 222 and the central processing unit are connectable to a control line via a connector 216. The connector 216 may be at least one of a socket and a plug.

Figure 1 also shows a second engine-generator 200'. The second engine-generator 200' may be identical to the first engine-generator 200 in the sense that it is arranged to provide the same amount of power as the first engine-generator 200. Alternatively, the second engine-generator 200' may be similar to the first engine generator 200 in the sense that they are controlled in the same way, but that the maximum powers the engine-generators can provide differs. Two equivalent engine-generators have substantially the same maximum power they can provide, but different architectures.

In the implementation as depicted by Figure 1, the first engine generator 200 and the second engine generator 200' have the same architectures and comprise the same components. The first engine-generator 200 and the second engine-generator 200' may comprise various further components, which have been omitted for the sake of clarity.

Figure 1 also show a power distributor device 100. The power distributor device 100 is arranged to provide power to a load 290 that is about as large as the sum of the maximum powers that can be provided by the first engine-generator 200 and the second engine-generator 200'. The output of the first generator 200 and the second generator 200' are connected to a power combination circuit 120 which ads up the power provided by the generators and provides the combined power to the load 290.

The power distributor device 100 is controlled by means of a distributor processing unit 102. The distributor processing unit 102 is connected to the power combination circuit 120 for controlling how the powers provided by each of the generators is combined in a balanced way. The distributor processing device 102 is also connected to a power monitoring circuit 130. The power monitoring circuit is arranged to determine a power requirement of the load 290. This may be the load in general, but also a real power requirement and a reactive power requirement.

The power distributor device 100 further comprises a first communication module 110 and a second communication module 110'. The first communication module 110 comprises a first local control communication unit 112, a first central control communication unit 114 and a communication connector 116 which may comprise at least one of a plug and a socket for being connectable to the first engine-generator 200 by means of a data transfer cable. The second communication module 110' comprises the same components as the first communication module 110.

The first local control communication unit 112 is arranged to control the first engine control unit 222 directly, by bypassing the first central processing unit 202 of the first engine-generator 200. Commands for providing more fuel, more inlet air or otherwise providing increasing delivered engine power - or, alternatively, providing less engine power, are provided directly to the first engine control unit 222.

In the same way, the power factor of the provided electrical power is controlled directly by the first control communication unit 112 by directly controlling operation of the first automatic voltage regulator 212.

Control signals provided to the first engine control unit 222 may be analogue or digital signals, depending on the requirements of the first engine control unit 222. It is noted that in the chain of communication, signals may be transformed from the digital domain to the analogue domain and the other way around.

The first central control communication unit 114 is arranged to provide commands to the first central processing unit 202. More in particular, the first central control communication unit 114 is arranged to command the first central processing unit 202 to start or to stop operation of the first engine 220.

In one implementation, both the first engine-generator 200 and the second engine-generator are controlled to operate at the same power level, i.e. provide power such that the ratio of provided power and maximum are substantially the same for the first engine-generator 200 and the second engine-generator 200'.

In another implementation, the power required or demanded by the load 290 is compared to the maximum load of each of the engine-generators. If both engine-generators are arranged to provide the same maximum power, operation of one engine-generator is sufficient if the power demanded by the load 290 is less than half the total maximum power that may be provided by the first engine-generator 200 and the second engine-generator 200' together.

If the amount of required power drops from, for example, 80% to 45% of the total available power, the distributor processing unit 102 controls the first local control communication unit 112 to reduce fuel feed to the first engine 220. In case required, the distributor processing unit 102 controls the second local control communication unit 112' to increase the fuel feed to the second engine 220' such that the total amount of power provided by the engine-generators together matches the power demand of the load. If the power provided by the second engine-generator 200' matches the power required for the load 290, the distributor processing unit 102 controls the first central control communication unit 114 to switch off the first engine 220.

If, subsequently, the power required by the load 290 increase above an amount that can be provided by a single engine-generator, the first engine 220 is switched on again. This is arranged by the distributor processing unit 102 issuing a command to the first central control communication unit 114 to communicate to the first central processing unit 202 to switch on the first engine 220 by operating the starter engine 232.

Once the first engine 220 runs, the distributor processing unit 102 issues commands to the first local control communication unit 116 to instruct the first engine control unit 222 to operate the first engine 220 such tat it is arranged to provide electrical energy at a required power level, at the correct frequency. Also instructions may be issued to the first automated voltage regulator 212 to set the appropriate value of the power factor of the first generator 210. In one implementation, the power factor of power provided by the first generator 210 is substantially equal to the power factor o power provided by the second generator 210'.

The phase and frequency of the power signal provided the first generator 210 is to match the phase and frequency of the power signal already provided by the second generator 210' - which may be controlled by controlling the first engine control unit 222 and the first automated voltage regulator 212. More in particular, at least one of the fuel supply, crank shaft torque, engine power supply, air-fuel ratio, valve timing and fuel injection timing may be controlled. It is noted that through standardised interfaces of engine control units, such information may be available and controllable.

In a preferred embodiment, functions of the first engine control unit 222 may be controlled by means of an analogue signal. In particular control of angular velocity of the crank shaft may be controlled by means of an analogue signal. Such control may be directly in the sense that for example the desired angular speed is directly related to a signal value of the analogue signal offered. Such control may also be indirectly in the sense that the value of the analogue signal offered to the first engine control unit 222 has a direct relation to the fuel supplied to the first engine 220, which has effect on the angular speed of the crankshaft and in that sense on the frequency of an alternating current supplied by the first generator.

Such signal communication protocol is standardised, though polarity conventions may vary over different manufacturers. Therefore, a polarity reverser switch may be provided in the power distributor device for changing the polarity of a control signal provided to the first engine control unit 222.

Once phases and frequencies match, the distributor processing unit 102 operates the power combination circuit 120 to combine power provided by the first generator 210 with power provided by the second generator 210'.

In another implementation, the first engine-generator 200 is arranged to provide a maximum power three times as large as the maximum power that may be provided by the second engine-generator 200'. In this implementation, if power requirement drops from 100% to 70%, firstly the second engine-generator 200 is switched off. If subsequently the power demand drops to 20% of the total maximum, the first engine-generator 200 is switched on again and the second engine-generator 200' is switch off once the first engine-generator 200 is operational again. The information on maximum powers that may be provided by the various engine-generators connected to the power distributor device 100 may be readily available in the power distributor device 100. Alternatively or additionally, such information may be provided by the central processing units 202 over the communication lines.

In summary, the description relates to a distribution device combines power signals from multiple - two or more - engine-generators. The distribution device controls engine behaviour by directly controlling the engine control units of the engines. This control of the engine allows to control an amount of power transferred to and provided by generator, as well as phase and frequency of the power signal. Start and stop control is arranged by the distribution device instructing a central processing module of the engine-generator to either start or shut down the engine of a particular engine-generator.

In the description above, it will be understood that when an element such as layer, region or substrate is referred to as being "on" or "onto" another element, the element is either directly on the other element, or intervening elements may also be present. Also, it will be understood that the values given in the description above, are given by way of example and that other values may be possible and/or may be strived for.

Furthermore, the invention may also be embodied with less components than provided in the embodiments described here, wherein one component carries out multiple functions. Just as well may the invention be embodied using more elements than depicted in the Figures, wherein functions carried out by one component in the embodiment provided are distributed over multiple components.

It is to be noted that the figures are only schematic representations of embodiments of the invention that are given by way of non-limiting examples. For the purpose of clarity and a concise description, features are described herein as part of the same or separate embodiments, however, it will be appreciated that the scope of the invention may include embodiments having combinations of all or some of the features described. The word 'comprising' does not exclude the presence of other features or steps than those listed in a claim. Furthermore, the words 'a' and 'an' shall not be construed as limited to 'only one', but instead are used to mean 'at least one', and do not exclude a plurality.

A person skilled in the art will readily appreciate that various parameters and values thereof disclosed in the description may be modified and that various embodiments disclosed and/or claimed may be combined without departing from the scope of the invention.

It is stipulated that the reference signs in the claims do not limit the scope of the claims, but are merely inserted to enhance the legibility of the claims.

## Claims

1. Distribution device arranged to provide electrical power to a load, the device comprising:
a first power input for receiving electrical power from a first generator comprised by a first engine-generator;
a second power input for receiving electrical power from a second generator comprised by a second engine-generator;
a power requirement module for determining a power requirement for the load;
a power supply connector for providing power received via the first power in put and the second power input to the load;
a first local control communication module arranged to communicate to a first engine control unit of a first combustion engine of the first engine- generator;
a second local control communication module to communicate to a second engine control unit of a second combustion engine of the second engine- generator;
a first central control communication module to communicate to a first central control unit of the first engine-generator;
a second central control communication module to communicate to a central local control unit of the second engine-generator;
a central processing unit arranged to:
determine a power requirement of the load;
switch at least one of the first engine-generator and second engine-generator on or off via at least one of the first control communication module and the second control communication module, respectively, in accordance with the determined power requirement; and
control power provided by at least one of the first engine-generator and second engine-generator by controlling operation of the first combustion engine via the first local communication module and controlling operation of the second combustion engine via the second local communication module, in accordance with the determined power requirement.

2. Distribution device according to claim 1, wherein:
the power requirement module is arranged to determine a power factor of the load;
a first local communication module arranged to communicate to a first automatic voltage regulator of the first engine-generator;
a second local communication module arranged to communicate to a second automatic voltage regulator of the second engine-generator;
the central processing unit is arranged to control at least one of the first automatic voltage regulator and the second automatic voltage regulator to control a first power factor of electrical power supplied by the first generator and a second power factor of electrical power supplied by the second generator such that a total power factor of the total electrical power supplied to the distribution device matches the determined required power factor.

3. Distribution device according to claim 2, wherein the first power factor is substantially the same as the second power factor.

4. Distribution device according to any of the preceding claims, further comprising:
at least one of a first socket or a first plug connected to the first local communication module and the first central control communication module for providing a connector to a cable for transferring data from the distribution device to the first engine-generator; and
at least one of a second socket or a second plug connected to the second local communication module and the second central control communication module for providing a connector to a cable for transferring data from the distribution device to the second engine- generator.

5. Distribution device according to any of the preceding claims, wherein the central processing unit has access to information on a first maximum power that may be provided by the first engine-generator and a second maximum power that may be provided by the second engine-generator, the first power being equal to or larger and wherein the central processing unit is further arranged to:
switch off the second engine-generator is the determined required power is below the first maximum power.

6. Distribution device according to claim 5, wherein the central processing unit is further arranged to switch off the first engine-generator and switch on the second engine-generator if the determined required power is below the second maximum power.

7. Distribution device according to any of the preceding claims, wherein, if both the first engine-generator and the second engine-generator are operational, the central processing unit is arranged to communicate with the first engine control unit and the second engine control unit such that a first power ratio of a first actual output of the first engine-generator and a first maximum output of the first engine-generator is substantially equal to a second power ratio of a second actual output of the second engine-generator and a second maximum output of the second engine-generator.

8. Distribution device according to any of the preceding claims, wherein the central processing unit is arranged to communicate to at least one of the first engine control unit and the second engine control unit at least one of:
- fuel supply;
- crank shaft torque;
- engine power supply;
- air-fuel ratio;
- valve timing;
- fuel injection timing.

9. Engine-generator module comprising:
an internal combustion engine;
an electrical generator connected to the engine for converting mechanical energy to electrical energy;
an engine control unit for controlling operation of the internal combustion engine in accordance with instructions provided by the distribution device according to any of the preceding claims; and
a local control unit for controlling operation of the engine-generator module by stopping and starting the internal combustion engine in accordance with instructions provided by the distribution device according to any of the preceding claims.

10. Engine-generator module according to claim 9, further comprising an automatic voltage regulator arranged to adjust a power factor of power supplied by the engine-generator, wherein the automatic voltage regulator is arranged to adjust the power factor in accordance with instructions provided by the distribution device according to claim 2 or claim 3.
